# EUROPEAN PATENT SPECIFICATION

(11) **EP 1 378 315 B1**
(45) Date of publication and mention of the grant of the patent: **31.08.2005**
(21) Application number: 02708376.5
(22) Date of filing: 08.03.2002
(51) Int. Cl.: B23Q 1/01, B23Q 1/54

(54) **MACHINE FOR MACHINING LARGE PARTS**
MASCHINE ZUR MASCHINELLEN BEARBEITUNG VON GROSSEN TEILEN
MACHINE DE MECANISATION DE PIECES DE GRANDES DIMENSIONS

(30) Priority: 09.03.2001 ES 200100556 U
(43) Date of publication of application: 07.01.2004
(73) Proprietor: Loxin 2002, S.L., 08010 Barcelona (ES)
(72) Inventor: BAIGORRI HERMOSO, Julián, E-08010 Barcelona (ES)
(74) Representative: Schäfer, Matthias W.
(86) International application number: PCT/ES2002/000103
(87) International publication number: WO 2002/072308

(56) References cited:
- DE-A- 19 938 058
- DE-U- 29 705 152

## Description

The present descriptive memory refers, to a machine for machining large parts, of the type that comprises a bridge that slides along two guides and supports a machining device based in parallel kinematics.

Currently there are several types of machines consisting of a bridge that slides along two guides and is fitted with the device or tool that will act on the part to be machined. These devices or tools are designed to move horizontally, transversely and vertically by means of the aforementioned bridge and the guides, in order to perform the machining tasks they are programmed for. This kind of conventional machines can only work in three cartesian axes (x, y, z) based systems, sometimes with the help of any additional rotative axis

One of the disadvantages presented by machines comprising a bridge and its corresponding guides is that, due to its great mass, and its corresponding great inertia, operating speeds and accelerations must be low in order to obtain an acceptable machining tolerances.

An improved example of this kind of conventional machines can be found in Patent DE-A-19938058 which discloses the closest prior art, protecting a bridge sliding along two guides, comporting a machining device fitted with ascending and descending movement, being added two rotating movements in the machining tool. This machine joins the three Cartesian axes, x, y, z, conforming a conventional linear system, improving with no doubt the flexibility of the working space, although not avoiding the problems mentioned above of low operating speed and low performance qualities, which are usual in these conventional machines.

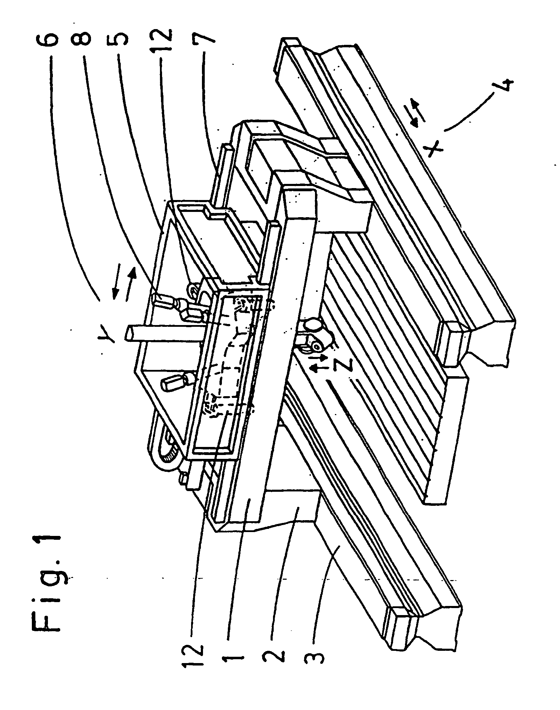

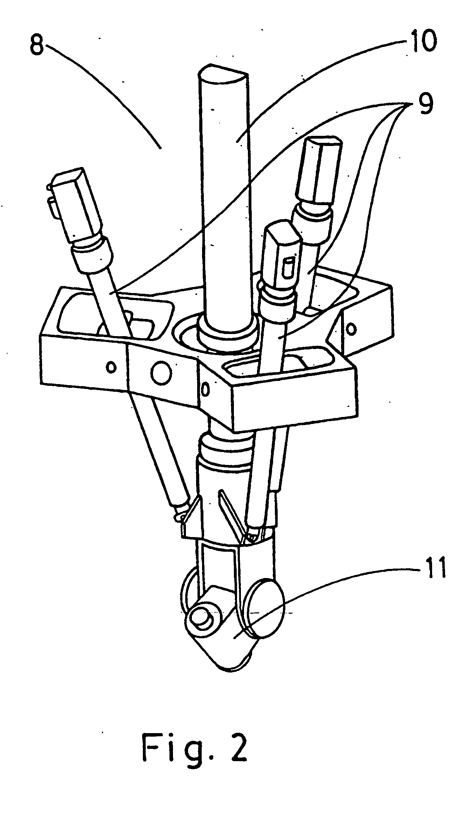

Another example of these conventional machines can be found in the claimed types of patent DE-U-29705152, where two variations are comprised (fig. 3 and 5) from the model above mentioned with three Cartesian axes and two circular movements in the tool which are integrated in one only machine, being the novelty in the substitution of the bridge by a circular course that, although permitting the same movements in the x, y, z axis of the prior example, they do it in a more reduced working space, being so adequate only for medium sized parts with low precision. Another variation comprised in this patent (fig. 4) substitutes the upward and downward movements in z axis by linear actuators, which make turns and movements along this axis, slightly improving the capability of movement, although not resolving the problems above mentioned.

There are also some systems or devices for part machining, commonly known in the industry as parallel kinematics machines (PKM), which allow part machining in a predetermined small area, although with great acceleration and higher precision than all kinds of machines mentioned before, mainly due to their low moving mass, by means of multiple interpolated axes, usually obtained by means of multiple linear actuators.

As for the machines or devices for machining purposes based on the parallel kinematics system, it must be said that although they provide precision and high speed and acceleration, its application scope is limited and consequently this system is not currently used for large parts machining purposes.

To solve the problems currently affecting large parts machining, the machine that is the subject of the present invention has been developed as defined in claim 1.

The machine for machining large parts put forward has multiple advantages over the solutions currently used in the industry. The most important one is that the parallel kinematics machine has access to wide work areas by virtue of its movements in coordinates X, Y and Z, plus the total flexibility of movements that the parallel kinematics head has within its own work area.

An advantage of a preferred embodiment of the present invention is the synchronization of the operation of the parallel kinematics machine with its movements in the X, Y and Z Cartesian axes; in other words, while the parallel kinematics machine works at full speed and acceleration, the Cartesian axes track its movement, making it possible to expand the PKM's work area to the whole Cartesian area of the machine presented here.

Another significant advantage of the machine put forward is its high resistance to bending, which allows a high degree of precision, since the absence of torsion phenomena allows minimum tolerances.

Another important advantage of the present invention is its high operating speed, which obviously significantly reduces machining times and therefore costs.

The final advantage of the machine for machining large parts we will mention is its low manufacturing cost compared to that of other sophisticated machines widely used in the industry.

To better understand this invention, the optimal assembly is represented in the annexed plan. In this plan:
Figure -1- shows the present invention in perspective.
Figure -2- shows a detail of an example of parallel kinematics machine which can be mounted in the platform of the bridge.

The machine for machining large parts put forward incorporates, as can be seen in the figures, a bridge (1) of variable configuration, whose feet (2) slide horizontally along the guides (3), allowing for movements in coordinate X (4).

On top of the bridge (1) there is a platform (5) that travels transversely in relation to the machine's guides (3) by means of its own guides (7), allowing for all possible positions of the platform (5) in relation to coordinate Y (6).

The aforementioned platform (5) of variable configuration is fitted with any type of parallel kinematics machine (8), made of several interpolated axes by means of actuator cylinders (9), being possible to incorporate an optional intermediate central spindle (10), with a head(11) at its bottom end capable of positioning itself in any position according to the actuators' axes (9).

For the upward and downward movements of the parallel kinematics machine (8), that is, its movements in relation to coordinate -Z-, any of the multiple devices currently known in the industry are used, for example, actuator cylinders (12), ball screws, racks, etc.

For the control of the machine, there is a computing control unit, which controls all the programmed movements, carrying out the synchronization of the Cartesian movements of each component, while the head of the parrel kinematics machine (8) will be positioned automatically at the appropriate work points.

A detailed description of the rest of the mechanics of the machine is expressly omitted; as it is not the subject of any claim.

Now that the nature of this invention and the optimal way to manufacture it have been sufficiently described, it only remains to be said that such description is not restrictive, and it is possible to introduce changes, as defined in the appended claims.

## Claims

1. Machine for machining large parts, comprising a parallel kinematics machine (8) made of several interpolated axes **characterized in that** the parallel kinematics machine (8) is arranged on a linear kinematics machine having three cartesian or orthogonal axes (X, Y, Z) formed by a mobile bridge (1) being movable in the direction of the X-axis, and a platform (5) mounted on top of the bridge (1) and being movable in the direction of the Y-axis, wherein the parallel kinematics machine (8) is mounted on the platform (5) and is movable in the direction of the Z-axis by means of a device such as actuator cylinders (12), ball screws, racks, etc.

2. Machine for machining large parts, as described in claim 1, **characterized in that** computing control unit is provided for synchronizing the X, Y and Z movements of each component.

## Patentansprüche

1. Maschine zum Bearbeiten großer Werkstücke, enthaltend eine parallel-kinematische Maschine (8) mit mehreren interpolierten Achsen,
**dadurch gekennzeichnet, daß** die parallel-kinematische Maschine drei kartesische oder orthogonale Achsen (X, Y, Z) aufweist, die von einer bewegbaren Brücke (1) gebildet werden, die in Richtung der X-Achse verschiebbar ist, und eine Plattform (5), die oben auf die Brücke (1) montiert und in Richtung der Y-Achse verschiebbar ist, worin die parallel-kinematische Maschine (8) auf der Plattform (5) montiert und in Richtung der Z-Achse mittels einer Einrichtung, beispielsweise Antriebszylindem (12), Kugelschrauben, Steuerungsgestellen usw., verschiebbar ist.

2. Maschine zum Bearbeiten großer Werkstücke nach Patentanspruch 1,
**dadurch gekennzeichnet, daß** ein Rechner-Steuergerät zum Synchronisieren der X-, Y- und Z-Verschiebungen jeder Komponente vorhanden ist.

## Revendications

1. Machine pour l'usinage de grandes pièces comprenant une machine cinématique parallèle (8) composée de plusieurs axes interpolés **caractérisée en ce que** la machine cinématique parallèle (8) est montée sur une machine cinématique linéaire présentant trois axes cartésiens ou orthogonaux (X, Y, Z) formés d'un pont mobile (1) pouvant être déplacé selon l'axe X et d'une plateforme (5) montée sur le sommet du pont (1) pouvant être déplacée selon l'axe Y et **caractérisée en ce que** la machine cinématique parallèle (8) est montée sur la plateforme (5) et peut être déplacée selon l'axe Z grâce à un dispositif de vérins de commande (12), de vis à rotule, de crémaillères, etc.

2. Machine pour l'usinage de grandes pièces selon la revendication 1 **caractérisée en ce qu'**une baie de contrôle est prévue pour la synchronisation des mouvements X, Y et Z de chaque élément.
